# EUROPÄISCHE PATENTSCHRIFT

(11) **EP 3 280 614 B1**
(45) Veröffentlichungstag und Bekanntmachung des Hinweises auf die Patenterteilung: **05.02.2020**
(21) Anmeldenummer: 16713452.7
(22) Anmeldetag: 01.04.2016
(51) Int. Cl.: B60N 2/08, B60N 2/12, B60N 2/02, B60N 2/20

(54) **LÄNGSEINSTELLER FÜR EINEN FAHRZEUGSITZ UND FAHRZEUGSITZ**
LONGITUDINAL ADJUSTER FOR A VEHICLE SEAT, AND VEHICLE SEAT
DISPOSITIF DE RÉGLAGE EN LONGUEUR D'UN SIÈGE DE VÉHICULE ET SIÈGE DE VÉHICULE

(30) Priorität: 07.04.2015 DE 102015206164
(43) Veröffentlichungstag der Anmeldung: 14.02.2018
(73) Patentinhaber: Adient Luxembourg Holding S.à r.l., 1855 Luxembourg (LU)
(72) Erfinder: UTZINGER, Karl, 66919 Weselberg (DE); WILLEMS, Boris, 66839 Schmelz (DE)
(74) Vertreter: Liedhegener, Ralf
(86) Internationale Anmeldenummer: PCT/EP2016/057207
(87) Internationale Veröffentlichungsnummer: WO 2016/162278

(56) Entgegenhaltungen:
- WO-A2-2013/147846
- DE-A1-102004 038 587
- DE-B3-102004 057 900

## Beschreibung

Die Erfindung betrifft einen Längseinsteller für einen Fahrzeugsitz mit den Merkmalen des Oberbegriffs des Anspruchs 1, sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 10 2011 011 766 A1 sind ein gattungsgemäßer Längseinsteller sowie ein gattungsgemäßer Fahrzeugsitz bekannt. Der Längseinsteller umfasst zwei Schienenpaare mit jeweils zwei relativ zueinander verschiebbaren Sitzschienen, nämlich einer Oberschiene und einer Unterschiene, welche einander wechselseitig umgreifen. Die Oberschiene ist relativ zu der Unterschiene innerhalb eines Komforteinstellbereichs und darüber hinaus in eine Easy-Entry-Stellung verschiebbar.

Aus der DE 10 2004 038 587 A1 ist eine Vorrichtung zur selbsttätigen Arretierung einer Komponente bei Erreichen einer zuvor eingenommen und zwischenzeitlich zur Einnahme einer unterschiedlichen Funktionsposition verlassenen Einstellposition bekannt, wobei die Einstellposition auf einem Einstellbereich der Komponente änderbar vorgesehen ist, sowie die selbsttätige Arretierung der Komponente mittels eines Getriebemechanismus und eines Arretierelements bewirkbar ist, wobei der Getriebemechanismus die Bewegung der Komponente aus ihrer Einstellposition in ihre Funktionsposition und zurück mittels einer variablen Übersetzung auf das Arretierelement überträgt.

Aus der WO 2013/147846 A2 ist eine einstellbare Memory-Track-Anordnung für einen Fahrzeugsitz bekannt, mit mindestens einer unteren Schiene, die fest an einer Fahrzeughalterungsstruktur befestigt ist, mindestens einer oberen Schiene, die fest an dem Fahrzeugsitz befestigt ist und gleitend in der mindestens einen unteren Schiene montiert ist, sowie mit einem Schienenverriegelungssystem, das mindestens eine Verriegelungsanordnung aufweist, die fest an einem des mindestens einen Paares aus oberer und unterer Schiene befestigt ist und innerhalb der jeweils anderen Schiene des Paares angeordnet ist. Die Verriegelungsanordnung ist eingerichtet, die erste Schiene des Paares in einer Vielzahl von Längspositionen in Bezug auf die andere Schiene des Paares zu verriegeln, wobei die Längspositionen um einen ersten Inkrementalabstand variieren. Die Memory-Track-Anordnung weist ferner ein erstes Stellglied sowie ein Speichersystem auf. Das erste Stellglied ist betriebsmäßig mit dem Schienenverriegelungssystem verbunden und ist zwischen einer nicht aktivierten Position und einer aktivierten Position bewegbar, wodurch das Stellglied das Schienenverriegelungssystem außer Eingriff bringt, um eine verschiebbare Längsbewegung des Fahrzeugsitzes zu einem ersten gewünschten Ort zu ermöglichen. Das Speichersystem dient zum Aufzeichnen der Längssitzverschiebung um eine zweite Inkrementaldistanz.

### Aufgabe

Der Erfindung liegt die Aufgabe zu Grunde, einen Längseinsteller für einen Fahrzeugsitz der eingangs genannten Art zu verbessern sowie einen entsprechenden Fahrzeugsitz bereitzustellen.

### Lösung

Diese Aufgabe wird erfindungsgemäß gelöst, durch einen Längseinsteller für einen Fahrzeugsitz mit den Merkmalen des Anspruchs 1.

Ein Längseinsteller für einen ein Sitzteil und eine Lehne umfassenden Fahrzeugsitz, weist eine sitzteilfeste erste Sitzschiene, eine zweite Sitzschiene, relativ zu welcher die erste Sitzschiene in Längsrichtung verschiebbar ist, auf. Der Längseinsteller weist ferner eine Verriegelung zur Verhinderung einer Längsverschiebung des Fahrzeugsitzes auf, wobei der Fahrzeugsitz für einen vereinfachten Zugang zu den rückwärtigen Sitzen aus der Gebrauchsstellung in eine Easy-Entry-Stellung überführbar ist, wenn die Verriegelung des Längseinstellers des Fahrzeugsitzes durch ein Vorklappen der Lehne entriegelt ist. Ferner ist eine Memory-Vorrichtung vorgesehen, welche eine eingestellte Sitzlängsposition speichert, die durch eine vorgenommene Längsverschiebung des Fahrzeugsitzes verlassen und wieder eingenommen wird. Der Längseinsteller ist zudem eingerichtet, für eine Aktivierung oder Deaktivierung der Memory-Vorrichtung zu unterscheiden, ob die Verriegelung des Längseinstellers durch ein Vorklappen der Lehne oder durch eine manuelle Betätigung mittels eines Handgriffs erfolgt ist.

Unter einer Easy-Entry-Funktion ist allgemein zu verstehen, dass ein Fahrzeugsitz zum erleichterten Einsteigen in eine hintere Sitzreihe aus einer Gebrauchsstellung, durch Vorklappen der Lehne sowie ein maximales Verschieben einer Längsverstellung in Längsrichtung, in eine sogenannte Easy-Entry-Stellung verschiebbar ist, um dem einsteigenden Fahrgast möglichst viel Platz zwischen dem Fahrzeugsitz und einer hinteren Sitzreihe bereitzustellen. Zum Aktivieren der Easy-Entry-Funktion wird ein Entriegeln der Längsverstellung in an sich bekannter Weise durch entsprechendes Vorklappen der Lehne ausgelöst. Wird die Lehne beim Zurückverschieben des Fahrzeugsitzes jedoch vor Erreichen der Memory-Position wieder aufgerichtet, so verriegelt die Längsverstellung vorzeitig. Zur Verhinderung eines vorzeitigen Aufrichtens der Lehne kann beispielsweise eine Verriegelung vorgesehen sein, welche die Lehne in der vorgeklappten Stellung arretiert. Diese Verriegelung muss jedoch in bekannter Weise beim Erreichen der Memory-Position durch ein manuelles Betätigen eines Handgriffs oder Hebels von Benutzer gelöst werden, um die Lehne wieder in eine Gebrauchsstellung aufrichten zu können.

Allgemein weist der Längseinsteller zusätzlich wenigstens ein von dem Sperrelement der Memory-Vorrichtung zu unterscheidendes, weiteres Verriegelungselement einer Verriegelung des Längseinstellers auf, welches dazu eingerichtet ist, die sitzteilfeste erste Sitzschiene in Bezug auf die strukturfeste zweite Sitzschiene zu verriegeln.

Zur genaueren Unterscheidung sei darauf hingewiesen, dass das Sperrelement lediglich zu Blockierung einer Bewegung der ersten Sitzschiene relativ zur zweiten Sitzschiene beim Erreichen der gespeicherten Memory-Position eingerichtet ist, während das Verriegelungselement in an sich bekannter Weiser einer Einstellung einer Sitzlängsposition dient und zur Aufnahme von bei einem Frontalaufprall oder Heckaufprall auftretenden Kräften eingerichtet ist. Beim Zurückschieben des Fahrzeugsitzes und Erreichen der gespeicherten Memory-Position erfolgt eine Blockierung der ersten Sitzschiene relativ zur zweiten Sitzschiene mittels des Sperrelements. Zum Betätigen des Sperrelements weist die Memory-Vorrichtung einen mit dem Getriebe wirkverbundenen und relativ zu einem Getriebe beweglichen Betätigungsarm auf. Spätestens bei Erreichen der gespeicherten Sitzlängsposition übt das Getriebe ein Steuermoment auf den Betätigungsarm aus, aufgrund dessen der Betätigungsarm das Sperrelement ansteuert. Unter "ansteuern" kann hierbei allgemein verstanden werden, dass mittels einer Bewegung des Betätigungsarmes eine Veränderung einer resultierenden, auf das Sperrelement wirkenden Kraft erzielt wird, in Folge dessen das Sperrelement bewegt wird.

Hierdurch wird die Möglichkeit geschaffen, die logische Unterscheidung, ob eine Entriegelung des Längseinstellers durch ein Vorklappen der Lehne oder durch manuelle Betätigung mittels eines Handgriff erfolgt, in vorteilhafter Weise mit einfachen Mitteln mechanisch abzubilden und demnach eine modulare Implementierung einer Easy-Entry-Funktion bereitzustellen. Hierdurch wird die Anzahl von individuell ausgestalteten Einzelteilen bei der Sitzherstellung und insbesondere bei der Sitzmontage verringert und die Anzahl an produktionstechnisch günstigeren Gleichteilen erhöht.

Hierbei ist ferner ein einfacher mechanischer Aufbau des Längseinstellers umsetzbar.

Vorteilhafte Ausgestaltungen, welche einzeln oder in Kombination miteinander eingesetzt werden können, sind Gegenstand der Unteransprüche.

Die mittels eines Sperrhebels und eines Mitnehmerhebels gebildete Mechanik kann in vorteilhafter Weise an unterschiedlichen Positionen entlang einer Längserstreckung eines Betätigungshebels angeordnet sein, um unterschiedliche Entriegelungswinkel am Übertragungsrohr umzusetzen, ohne dass der benötigte Hub durch einen mit der Lehne verbundenen Bowdenzug variiert. Diesen Gedanken weiterbildend kann der Betätigungshebel mit der Mechanik ferner in unterschiedlichen Winkelstellungen an dem Übertragungsrohr angebracht sein, insbesondere angeschweißt sein.

Ferner kann ein Betätigungshebel an einem Übertragungsrohr angeordnet sein. Hierbei kann der Betätigungshebel ferner dazu eingerichtet sein, auf eine Verriegelungsvorrichtung des jeweiligen Schienenpaares des Längseinstellers zu wirken, um die Verriegelungsvorrichtung zu entriegeln.

Erfindungsgemäss ist auch ein Mitnehmerhebel vorgesehen, welcher drehbar an dem Betätigungshebel gelagert ist. Der Mitnehmerhebel kann hierbei einen seitlich abstehenden Stift zur Betätigung eines Reset-Hebels, zur Deaktivierung und/oder Zurücksetzung der Memory-Vorrichtung, aufweisen.

Darüber hinaus weist der Betätigungshebel einen Sperrhebel auf, welcher auf der dem Mitnehmerhebel gegenüberliegenden Seite des Betätigungshebels angeordnet ist. Der Sperrhebel kann insbesondere drehbar gelagert sein.

Der Sperrhebel und der Mitnehmerhebel können an unterschiedlichen Positionen entlang einer Längserstreckung des Betätigungshebels angeordnet sein.

Die Lehne kann ferner mittels eines mit ihr verbundenen ersten Bowdenzugs auf den Betätigungshebel wirken. Hierbei kann der erste Bowdenzug mit dem Sperrhebel verbunden sein.

Der Betätigungshebel kann einen mit dem Sperrhebel zusammenwirkenden Anschlag aufweisen.

Der Betätigungshebel kann insbesondere durch ein Vorklappen der Lehne mit dem Anschlag in Kontakt bringbar sein. Ferner kann der Betätigungshebel durch ein Vorklappen der Lehne betätigt werden, wenn sich der Sperrhebel in Kontakt mit dem Anschlag befindet.

Der Sperrhebel kann mittels eines ersten Federelements gegenüber dem Betätigungshebel entgegen der Zugkraft des ersten Bowdenzugs mit einer Federkraft beaufschlagt sein.

Ferner wird die Aufgabe erfindungsgemäß gelöst, durch einen Fahrzeugsitz mit wenigstens einem zuvor beschriebenen Längseinsteller.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes,
- Fig. 2:: eine perspektivische Darstellung eines Schienenpaares eines erfindungsgemäßen Längseinstellers,
- Fig. 3:: eine perspektivische Darstellung eines Schienenpaares einer weiteren Ausführungsform eines erfindungsgemäßen Längseinstellers,
- Fig. 4:: eine Teildarstellung des Längseinstellers von Fig. 3 aus einem anderen Blickwinkel,
- Fig. 5a:: eine schematische Seitenansicht auf den Längseinstellers von Fig. 4 in verriegeltem Zustand,
- Fig. 5b:: eine schematische Seitenansicht auf den Längseinstellers von Fig. 5a aus entgegengesetzter Blickrichtung,
- Fig. 6a:: eine schematische Seitenansicht auf den Längseinstellers von Fig. 4 in entriegeltem Zustand, bei Betätigung mittels des Handgriffs,
- Fig. 6b:: eine schematische Seitenansicht auf den Längseinstellers von Fig. 6a aus entgegengesetzter Blickrichtung,
- Fig. 7a:: eine schematische Seitenansicht auf den Längseinstellers von Fig. 4 in verriegeltem Zustand, während dem Vorklappen der Lehne,
- Fig. 7b:: eine schematische Seitenansicht auf den Längseinstellers von Fig. 7a aus entgegengesetzter Blickrichtung,
- Fig. 8a:: eine schematische Seitenansicht auf den Längseinstellers von Fig. 4 in entriegeltem Zustand, mit vollständig vorgeklappter Lehne, und
- Fig. 8b:: eine schematische Seitenansicht auf den Längseinstellers von Fig. 8a aus entgegengesetzter Blickrichtung.

Die Zeichnungen werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 3 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

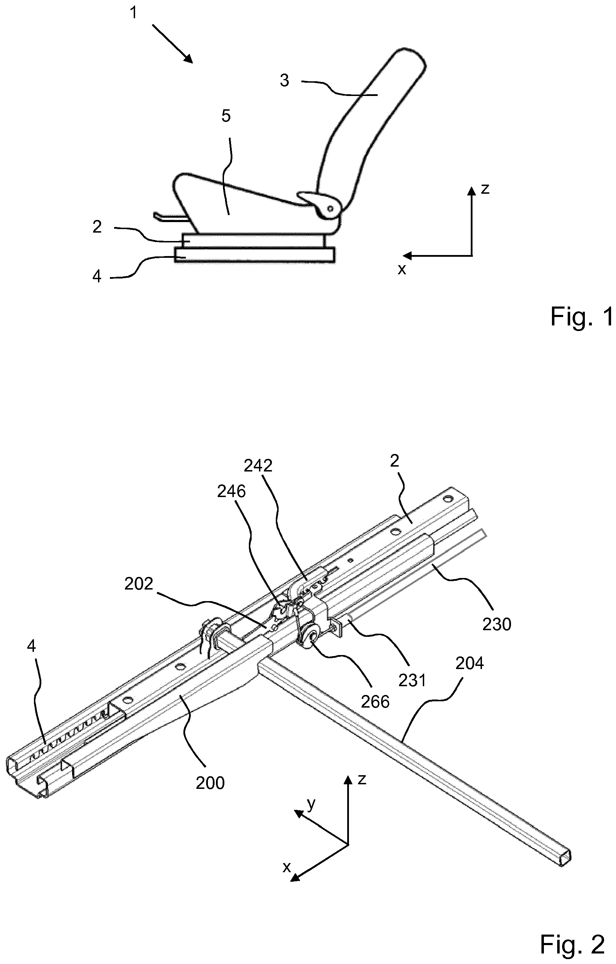

Der in Fig. 1 gezeigte Fahrzeugsitz 1 weist ein Sitzteil 5 auf und ist in einer Gebrauchsstellung mit aufgerichteter Lehne 3 auf einem Längseinsteller montiert. Der Längseinsteller weist eine erste Sitzschiene 2 und eine zweite Sitzschiene 4 auf, relativ zu welcher die erste Sitzschiene 2 in Längsrichtung verschiebbar ist. Der Fahrzeugsitz 1 ist hierbei mit der ersten Sitzschiene 2 fest verbunden. Die zweite Sitzschiene 4 ist üblicher Weise mit einem nicht dargestellten Fahrzeugboden und/oder einer Fahrzeugstruktur verbunden. Der Fahrzeugsitz 1 ist zusammen mit der sitzteilfesten, ersten Sitzschiene 2 relativ zu der strukturfesten, zweiten Sitzschiene 4 in Längsrichtung x verschiebbar. Vorzugsweise weist der Fahrzeugsitz zwei im Wesentlichen symmetrisch zu einer Mittelebene, die senkrecht zur Querrichtung y verläuft, angeordnete Längseinsteller auf.

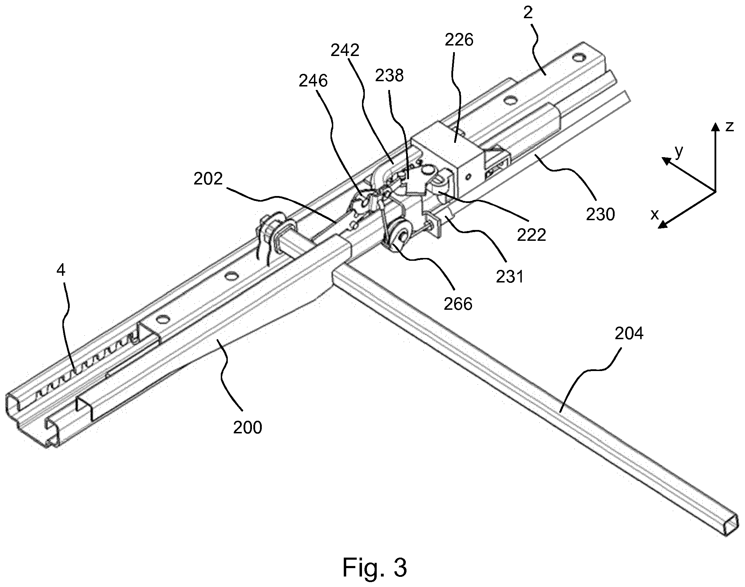

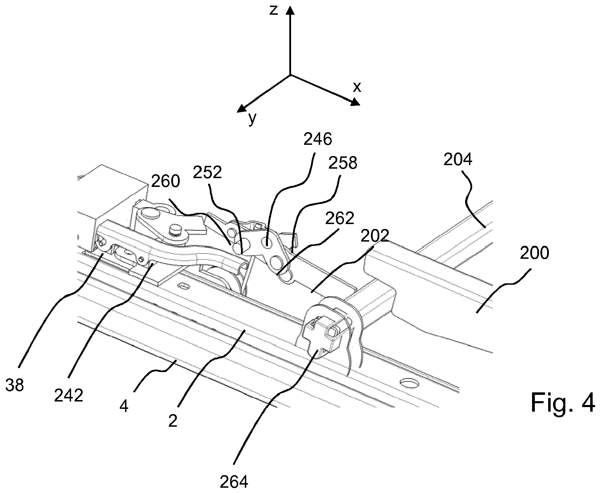

Nachfolgend werden die Figuren 2 bis 4 gemeinsam beschrieben. Die dargestellten Ausführungsformen entsprechen einander, sofern nicht ausdrücklich anders beschrieben. In Fig. 2 ist eine perspektivische Darstellung eines Schienenpaares eines erfindungsgemäßen Längseinstellers, sowie in Fig. 3 eine geringfügig abgewandelte Ausführungsform des Längseinstellers gezeigt. Die Darstellung aus Fig. 4 zeigt einen vergrößerten Ausschnitt des Längseinstellers von Fig. 3 aus einem anderen Blickwinkel.

In den Figuren 2 und 3 sind je eine perspektivische Darstellung eines mittels einer ersten Sitzschiene 2 und einer zweiten Sitzschiene 4 gebildeten Schienenpaares eines Längseinstellers mit einer aus darstellungstechnischen Gründen nicht sichtbaren Memory-Vorrichtung gezeigt. Die Memory-Vorrichtung ist hierbei in einem zwischen der ersten Sitzschiene 2 und der zweiten Sitzscheine 4 gebildeten Hohlraum angeordnet. Die Memory-Vorrichtung dient einer Easy-Entry-Funktion und erfasst beim Betätigen derselben eine Längsverschiebung der ersten Sitzschiene 2 relativ zur zweiten Sitzschiene 4. Im Falle eines wiederholten Einnehmens der Memory-Position blockiert die Memory-Vorrichtung eine weitere Längsverschiebung, insbesondere mittels eines nicht dargestellten Sperrelements. Eine von dem Längseinsteller bereitgestellte Funktion zum Einstellen einer Sitzlängsposition des Fahrzeugsitzes 1 ist mittels eines Handgriffs 200, welcher wie dargestellt an einer Übertragungsrohr 204 angeordnet ist, betätigbar. Ferner ist ein Betätigungshebel 202 an der Übertragungsrohr 204 angeordnet, welcher dazu eingerichtet ist, auf eine Verriegelungsvorrichtung des jeweiligen Schienenpaares des Längseinstellers zu wirken, um dieses zu entriegeln und den Fahrzeugsitz 1 entsprechend in Längsrichtung x verstellen zu können. Der Betätigungshebel 202 kann ferner einstückig mit dem Handgriff 200 ausgebildet sein.

Die in Fig. 3 dargestellte Ausführungsform des Längseinstellers unterscheidet sich von der in Fig. 2 gezeigten Ausführungsform lediglich durch eine in einem Gehäuse 226 angeordnete Spindel-Mutter-Anordnung, welche wie dargestellt mittels eines Mehrfunktionsteils 222 auf einen Blockierhebel 238 wirkt, um den Betätigungshebel 202 in der unteren, die Verriegelung des Längseinstellers entriegelnden Stellung zu sichern.

Wie in Fig. 4 im Detail dargestellt, ist die Übertragungsrohr 204 um einen dritten Drehpunkt 264 drehbar gelagert an der ersten Sitzschiene 2 angeordnet. Der Betätigungshebel 202 ist mit seinem einen Ende mit der Übertragungsstande 204 verbunden, insbesondere an dieser befestigt, und entsprechend um den dritten Drehpunkt 264 verschwenkbar. Der Betätigungshebel 202 ist eingerichtet, mit seinem der Übertragungsrohr 204 gegenüberliegenden freien Ende, auf eine nicht im Detail dargestellte Verrieglung des Längseinstellers zu wirken. In der dargestellten Stellung des Betätigungshebels 202 ist die Verriegelung des Längseinstellers verriegelt und die erste Sitzschiene 2 in ihrer Position relativ zur zweiten Sitzschiene 4 fixiert.

Die Memory-Vorrichtung des Längseinstellers weist eine mit einem Reset-Hebel 242 zusammenwirkende Zugstange 38 auf, welche durch eine entsprechende Durchgangsöffnung in der ersten Sitzschiene 2 hindurchragt. Eine Betätigung der Zugstange 38 bewirkt eine Deaktivierung und/oder Zurücksetzung der Memory-Vorrichtung. Der Reset-Hebel 242 ist ebenfalls mittels des Betätigungshebels 202 betätigbar. Hierzu ist an dem Betätigungshebel 202 ein um einen zweiten Drehpunkt 262 drehbar gelagerten Mitnehmerhebel 246 angeordnet, welcher einen seitlich abstehenden Stift 252 zur Betätigung des Reset-Hebels 242 aufweist. Der Reset-Hebel 242 ist vorliegend in Form eines Kipphebels ausgestaltet, welcher eine zur Betätigung abwärts gerichtete Bewegung des einen Endes in eine aufwärts gerichtete Bewegung des gegenüberliegenden Endes überführt. Somit wird mittels der Betätigung des Reset-Hebels 242 mittels eines Niederdrückens durch den Stift 252 die Zugstange 38 angehoben. Der Betätigungshebel 202 weist weiter einen, auf der dem Mitnehmerhebel 246 gegenüberliegenden Seite des Betätigungshebels 202 angeordnete, um einen ersten Drehpunkt 260 drehbar gelagerten Sperrhebel 258 auf.

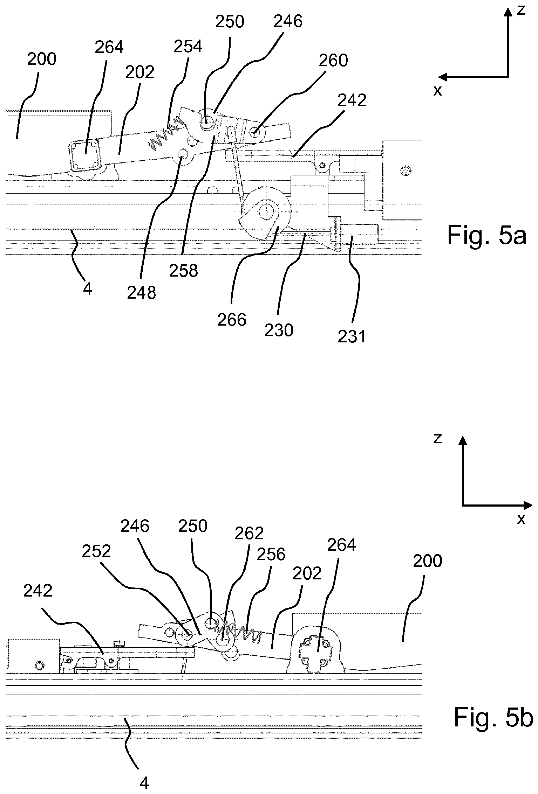

Die nachfolgend beschriebenen, paarweise mit a und b bezeichneten Figuren 5a bis 8b zeigen jeweils Seitenansichten des Längseinstellers in paarweise unterschiedlichen Zuständen.

Die Figuren 5a und 5b zeigen eine schematische Seitenansicht des Längseinstellers von Fig. 4 in verriegeltem Zustand aus zwei entgegengesetzten Blickrichtungen. Dieser Zustand entspricht insbesondere einer Gebrauchsstellung des Fahrzeugsitzes 1, in welcher der Fahrgast eine gewünschte Sitzlängsposition eingestellt hat, die Lehne 3 des Fahrzeugsitzes eine aufgerichtete Neigung aufweist und der Fahrgast in dem Fahrzeugsitz 1 sitzen kann. Der Handgriff 200 ist zusammen mit dem Betätigungshebel 202 um den dritten Drehpunkt 264 derart verschwenkt, dass der Betätigungshebel 202 die Verriegelung des Längseinstellers nicht entriegelt und diese somit verriegelt ist, um die eingestellte Sitzlängsposition einzuhalten. Der Reset-Hebel 242 wird in diesem Zustand ferner nicht von dem Stift 252 betätigt. Der Sperrhebel 258 steht mit einem zweiten Anschlag 250 des Mitnehmerhebels 246 in Kontakt, insbesondere hintergreift der Sperrhebel 258 den zweiten Anschlag 250 derart, dass ein Drehen des Mitnehmerhebels 246 um den zweiten Drehpunkt 262 gehemmt ist und der Mitnehmerhebel 246 in seiner Lage relativ zum Betätigungshebel 202 fixiert ist.

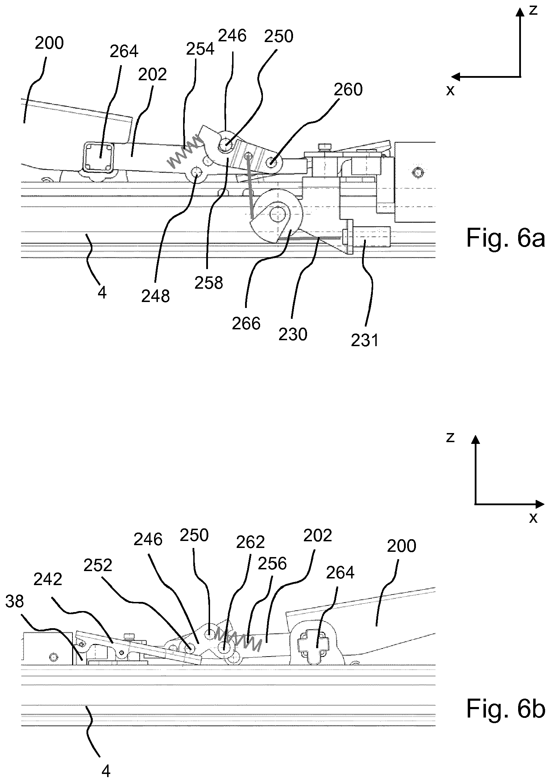

Die Figuren 6a und 6b zeigen eine schematische Seitenansicht auf den Längseinstellers von Fig. 4 in entriegeltem Zustand aus zwei entgegengesetzten Blickrichtungen, bei einer manuellen Betätigung mittels des Handgriffs. Dieser Zustand entspricht einem Fall, wenn ein in dem Fahrzeugsitz 1 sitzender Fahrgast den Fahrzeugsitz 1 aus einer ersten, einer Gebrauchsstellung entsprechenden Sitzlängsposition, in eine zweite Sitzlängsposition verstellen möchte. Die Lehne 3 des Fahrzeugsitzes weist hierbei üblicherweise eine aufgerichtete Neigung auf. Der Handgriff 200 ist hierbei zusammen mit dem Betätigungshebel 202 um den dritten Drehpunkt 264 derart verschwenkt, dass der Betätigungshebel 202 die Verriegelung des Längseinstellers entriegelt und der Fahrzeugsitz 1 mittels der sitzteilfesten ersten Sitzscheine 2 relativ zur strukturfesten zweiten Sitzschiene 4 verschoben werden kann, um die neue Sitzlängsposition einzunehmen. Der Sperrhebel 258 steht mit einem zweiten Anschlag 250 des Mitnehmerhebels 246 in Kontakt, insbesondere hintergreift der Sperrhebel 258 den zweiten Anschlag 250 derart, dass ein Drehen des Mitnehmerhebels 246 um den zweiten Drehpunkt 262 gehemmt ist und der Mitnehmerhebel 246 in seiner Lage relativ zum Betätigungshebel 202 fixiert ist. Demnach senkt sich bei Betätigung des Handgriffs 200 der Mitnehmerhebel 246 zusammen mit dem freien Ende des Betätigungshebels 202 in diesem Zustand ab. Folglich betätigt der Mitnehmerhebels 246 mit dem Stift 252 hierbei ebenfalls den Reset-Hebel 242, welcher die Memory-Vorrichtung über die Zugstange 38 deaktiviert und/oder zurücksetzt, um in der neu eingestellten Sitzlängsposition entsprechend auf diese eingestellt zu sein.

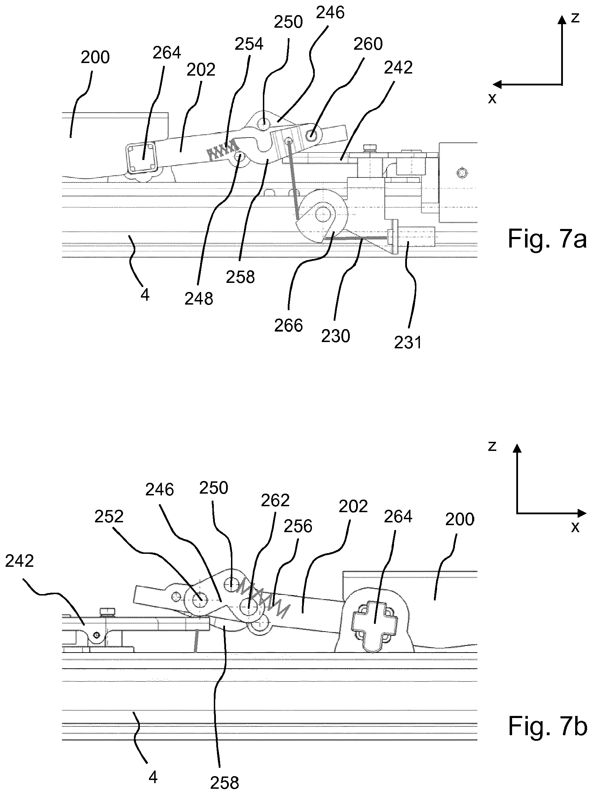

Die Figuren 7a und 7b zeigen eine schematische Seitenansicht auf den Längseinstellers von Fig. 4 in verriegeltem Zustand aus zwei entgegengesetzten Blickrichtungen, während dem Vorklappen der Lehne 3. Dieser Zustand entspricht einem Fall, wenn der Fahrzeugsitz 1 zur leichteren Zugänglichkeit einer hinteren Sitzreihe in eine hierzu vorgesehen Easy-Entry-Position überführt wird. Hierzu ist es beabsichtigt, die Verriegelung des Längseinstellers durch ein Vorklappen der Lehne 3 des Fahrzeugsitzes 1 zu entriegeln ohne jedoch die Memory-Vorrichtung über die Zugstange 38 zurückzusetzen. Der dargestellte Zustand entspricht einem noch verriegelten Längseinsteller mit einer bereits geringfügig vorgeklappten Lehne 3. Hierbei übt die Lehne 3 mittels eines mit ihr verbundenen ersten Bowdenzugs 230 eine entsprechende Zugkraft auf den Betätigungshebel 202 aus. Hierzu ist ein erstes Ende einer Ummantelung des ersten Bowdenzugs 230 in einer ersten Aufnahme 231 gehalten, während eine Seele des ersten Bowdenzugs 230 über eine Umlenkrolle 266 geführt ist und an dem Sperrhebel 258 angreift. Durch die dem geringfügigen Vorklappen der Lehne 3 entsprechende Zugkraft verschwenkt der Sperrhebel 258 um den ersten Drehpunkt 260, bis er in Anlage mit einem ersten Anschlag 248 des Betätigungshebels 202 gelangt, welcher ein weiteres Verschwenken des Sperrhebels 258 relativ zum Betätigungshebel 202 verhindert. Der Sperrhebel 258 gelangt hierbei außer Kontakt mit dem zweiten Anschlag 250 des Mitnehmerhebels 246 und gibt diesen hierdurch in seiner Beweglichkeit um den zweiten Drehpunkt 262 frei. Der Sperrhebel 258 ist mittels eines ersten Federelements 254 gegenüber dem Betätigungshebel 202 entgegen der Zugkraft des ersten Bowdenzuges 230 mit einer Federkraft beaufschlagt, insbesondere um den Sperrhebel 258 bei einem Aufrichten der Lehne 3 kraftunterstützt in den in Fig. 5a und Fig. 5b beschriebenen Zustand zurück zu versetzen. Das erste Federelement 254 ist vorliegend in Form einer Druckfeder ausgestaltet. Die Stellung des Handgriffs 200 zusammen mit dem Betätigungshebel 202 entspricht hierbei weiterhin der Stellung wie zu Fig. 5a und 5b beschrieben, so dass der Betätigungshebel 202 die Verriegelung des Längseinstellers noch nicht entriegelt hat.

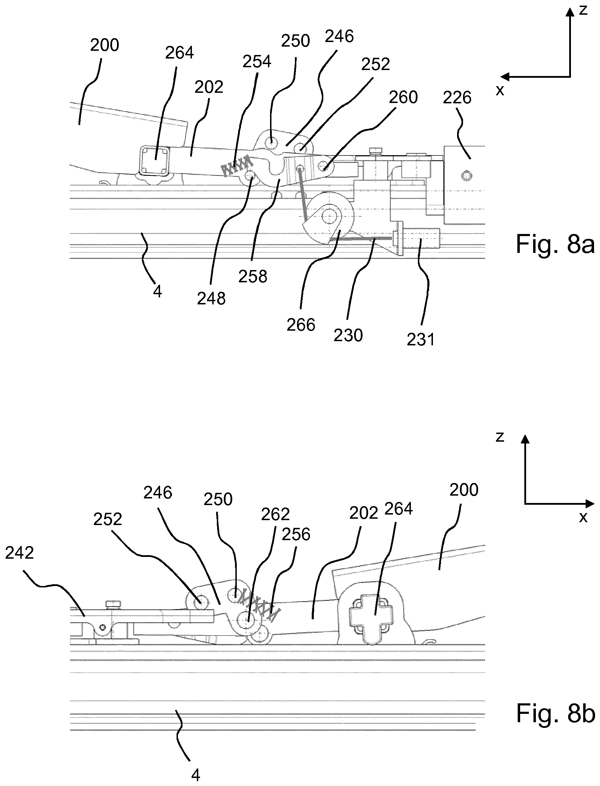

Der bei einem weiteren Vorklappen der Lehne 3 des Fahrzeugsitzes 1 eingenommene Zustand des Längseinstellers ist in den Figuren 8a und 8b gezeigt, welcher insbesondere einem Zustand mit vollständig vorgeklappter Lehne 3 entspricht. Hierbei bewirkt der erste Bowdenzug 230 eine stärkere Auslenkung des Sperrhebels 258, welcher diese Auslenkung entsprechend seiner gehemmten Bewegung relativ zum Betätigungshebel 202 an diesen überträgt. Somit wird mittels des Vorklappens der Lehne 3 der Betätigungshebel 202 betätigt. Dieser wird insbesondere von dem ersten Bowdenzug 230 in Richtung der Umlenkrolle 266 im Wesentlichen nach unten gezogen. Dies bewirkt weiterhin, dass der Handgriff 200 dem Betätigungshebel 202 in seiner Drehung um den dritten Drehpunkt 264 entsprechend folgt. Da der Sperrhebel 258 hierbei außer Kontakt mit dem zweiten Anschlag 250 des Mitnehmerhebels 246 ist und dieser in seiner Beweglichkeit um den zweiten Drehpunkt 262 frei ist, stützt sich der Mitnehmerhebel 246 über seinen Stift 252 bei einem Kontakt mit dem Reset-Hebel 242 an diesem ab und verschwenkt um den zweiten Drehpunkt 262, ohne den Reset-Hebel 242 zu betätigen. Der Mitnehmerhebel 246 ist mittels eines zweiten Federelements 256 gegenüber dem Betätigungshebel 202 in Richtung des Reset-Hebels 242 mit einer Federkraft beaufschlagt, insbesondere um den Mitnehmerhebel 246 bei einem Aufrichten der Lehne 3 kraftunterstützt in den in Fig. 5a und Fig. 5b beschriebenen Zustand zurück zu versetzen, so dass der Sperrhebel 258 den zweiten Anschlag 250 umgreift. Das zweite Federelement 256 ist vorliegend in Form einer Druckfeder ausgestaltet. Die von dem zweiten Federelement 256 erzeugte Federkraft ist geringer als die Kraft, welche der Reset-Hebel 242 über den Stift 252 auf den Mitnehmerhebel 246 ausübt. In diesem Zustand ist die Verriegelung des Längseinstellers entriegelt und die erste Sitzschiene 2 in ihrer Bewegung relativ zur zweiten Sitzschiene 4 freigegeben. Ferner ist die Memory-Vorrichtung, aufgrund der nicht angehobenen Zugstange 38, weiterhin aktiv und erfasst in an sich bekannter Weise eine Längsverschiebung des Fahrzeugsitzes 1, um bei einem späteren Erreichen einer zuvor verlassenen Memory-Position eine weitere Verschiebung der ersten Sitzschiene 2 relativ zu zweiten Sitzschiene 4 über die Memory-Position hinaus zu verhindern.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Schutzansprüchen.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 2: erste Sitzschiene
- 3: Lehne
- 4: zweite Sitzschiene
- 5: Sitzteil
- 38: Zugstange
- 200: Handgriff
- 202: Betätigungshebel
- 204: Übertragungsrohr
- 222: Mehrfunktionsteil
- 226: Gehäuse
- 230: erster Bowdenzug
- 231: erste Aufnahme
- 238: Blockierhebel
- 242: Reset-Hebel
- 246: Mitnehmerhebel
- 248: erster Anschlag
- 250: zweiter Anschlag
- 252: Stift
- 254: ersten Federelement
- 256: zweites Federelement
- 258: Sperrhebel
- 260: erster Drehpunkt
- 262: zweiter Drehpunkt
- 264: dritter Drehpunkt
- 266: Umlenkrolle
- x: Längsrichtung
- y: Querrichtung
- z: Vertikalrichtung

## Patentansprüche

1. Längseinsteller für einen ein Sitzteil (5) und eine Lehne (3) aufweisenden Fahrzeugsitz (1), aufweisend eine sitzteilfeste erste Sitzschiene (2), eine zweite Sitzschiene (4), relativ zu welcher die erste Sitzschiene (2) in Längsrichtung (x) verschiebbar ist, wobei der Längseinsteller eine Verriegelung zur Verhinderung einer Längsverschiebung des Fahrzeugsitzes (1) aufweist, wobei der Fahrzeugsitz (1) für einen vereinfachten Zugang zu den rückwärtigen Sitzen aus der Gebrauchsstellung in eine Easy-Entry-Stellung überführbar ist, wenn die Verriegelung des Längseinstellers des Fahrzeugsitzes (1) durch ein Vorklappen der Lehne (3) entriegelt ist, wobei eine Memory-Vorrichtung vorgesehen ist, welche eine eingestellte Sitzlängsposition speichert, die durch eine vorgenommene Längsverschiebung des Fahrzeugsitzes (1) verlassen und wieder eingenommen wird, wobei der Längseinsteller die Memory-Vorrichtung aktiviert, wenn die Verriegelung des Längseinstellers durch ein Vorklappen der Lehne (3) erfolgt ist und der Längseinsteller die Memory-Vorrichtung deaktiviert, wenn die Verriegelung des Längseinstellers durch eine manuelle Betätigung mittels eines Handgriffs (200) erfolgt ist,
**dadurch gekennzeichnet, dass**
ein Betätigungshebel (202) an einem Übertragungsrohr (204) angeordnet ist, wobei ein Mitnehmerhebel (246) vorgesehen ist, welcher drehbar an dem Betätigungshebel (202) gelagert ist.

2. Längseinsteller gemäß Anspruch 1, wobei der Betätigungshebel (202) dazu eingerichtet ist, auf eine Verriegelungsvorrichtung des jeweiligen Schienenpaares des Längseinstellers zu wirken, um dieses zu entriegeln.

3. Längseinsteller gemäß einem der Ansprüche 1 oder 2, wobei der Mitnehmerhebel (246) einen seitlich abstehenden Stift (252) zur Betätigung eines Reset-Hebels (242), zur Deaktivierung und/oder Zurücksetzung der Memory-Vorrichtung, aufweist.

4. Längseinsteller gemäß einem der Ansprüche 1 bis 3, wobei der Betätigungshebel (202) einen Sperrhebel (258) aufweist, welcher auf der dem Mitnehmerhebel (246) gegenüberliegenden Seite des Betätigungshebels (202) angeordnet ist.

5. Längseinsteller gemäß Anspruch 4, wobei der Sperrhebel (258) drehbar gelagert ist.

6. Längseinsteller gemäß einem der Ansprüche 4 bis 5, wobei der Sperrhebel (258) und der Mitnehmerhebel (246) an unterschiedlichen Positionen entlang einer Längserstreckung des Betätigungshebels (202) angeordnet sind.

7. Längseinsteller gemäß einem der Ansprüche 4 bis 6, wobei die Lehne (3) mittels eines mit ihr verbundenen ersten Bowdenzugs (230) auf den Betätigungshebel (202) wirkt.

8. Längseinsteller gemäß Anspruch 7, wobei der erste Bowdenzug (230) mit dem Sperrhebel (258) verbunden ist.

9. Längseinsteller gemäß einem der Ansprüche 4 bis 8, wobei der Betätigungshebel (202) einen mit dem Sperrhebel (258) zusammenwirkenden Anschlag (248) aufweist.

10. Längseinsteller gemäß Anspruch 9, wobei der Betätigungshebel (202) durch ein Vorklappen der Lehne (3) mit dem Anschlag (248) in Kontakt bringbar ist.

11. Längseinsteller gemäß einem der Ansprüche 9 bis 10, wobei der Betätigungshebel (202) durch ein Vorklappen der Lehne (3) betätigt wird, wenn sich der Sperrhebel (258) in Kontakt mit dem Anschlag (248) befindet.

12. Längseinsteller gemäß einem der Ansprüche 7 bis 11, wobei der Sperrhebel (258) mittels eines ersten Federelements (254) gegenüber dem Betätigungshebel (202) entgegen der Zugkraft des ersten Bowdenzugs (230) mit einer Federkraft beaufschlagt ist.

13. Fahrzeugsitz (1) mit einem Sitzteil (5) und einer Lehne (3), wobei der Fahrzeugsitz (1) einen Längseinsteller gemäß einem der vorhergehenden Ansprüche aufweist.

## Claims

1. Longitudinal adjuster for a vehicle seat (1) having a seat part (5) and a backrest (3), having a first seat rail (2) which is fixed to the seat part, and a second seat rail (4), relative to which the first seat rail (2) is displaceable in the longitudinal direction (x), wherein the longitudinal adjuster has a lock for preventing a longitudinal displacement of the vehicle seat (1), wherein the vehicle seat (1) can be transferred from the use position into an easy-entry position, to facilitate access to the rear seats, when the lock of the longitudinal adjuster of the vehicle seat (1) is released by folding the backrest (3) forwards, wherein a memory device is provided which stores a set longitudinal position of the seat, said longitudinal position being left and restored by carrying out a longitudinal displacement of the vehicle seat (1), wherein the longitudinal adjuster activates the memory device when the longitudinal adjuster has been locked by the backrest (3) being folded forwards, and the longitudinal adjuster deactivates the memory device when the longitudinal adjuster has been locked by manual actuation by means of a handle (200), **characterized in that** an actuating lever (202) is arranged on a transmission tube (204), wherein a drive lever (246) is provided which is mounted rotatably on the actuating lever (202).

2. Longitudinal adjuster according to Claim 1, wherein the actuating lever (202) is configured to act on a locking device of the respective pair of rails of the longitudinal adjuster in order to release the latter.

3. Longitudinal adjuster according to either of Claims 1 and 2, wherein the driver lever (246) has a laterally protruding pin (252) for actuating a reset lever (242), for deactivating and/or resetting the memory device.

4. Longitudinal adjuster according to one of Claims 1 to 3, wherein the actuating lever (202) has a locking lever (258) which is arranged on that side of the actuating lever (202) which is opposite the drive lever (246).

5. Longitudinal adjuster according to Claim 4, wherein the locking lever (258) is mounted rotatably.

6. Longitudinal adjuster according to either of Claims 4 and 5, wherein the locking lever (258) and the drive lever (246) are arranged at different positions along a longitudinal extent of the actuating lever (202).

7. Longitudinal adjuster according to one of Claims 4 to 6, wherein the backrest (3) acts on the actuating lever (202) by means of a first Bowden cable (230) connected to the backrest.

8. Longitudinal adjuster according to Claim 7, wherein the first Bowden cable (230) is connected to the locking lever (258).

9. Longitudinal adjuster according to one of Claims 4 to 8, wherein the actuator lever (202) has a stop (248) interacting with the locking lever (258).

10. Longitudinal adjuster according to Claim 9, wherein the actuating lever (202) can be brought into contact with the stop (248) by the backrest (3) being folded forwards.

11. Longitudinal adjuster according to either of Claims 9 and 10, wherein the actuating lever (202) is actuated by the backrest (3) being folded forwards, when the locking lever (258) is in contact with the stop (248).

12. Longitudinal adjuster according to one of Claims 7 to 11, wherein the locking lever (258) is acted upon with a spring force by means of a first spring element (254) in relation to the actuating lever (202) counter to the tensile force of the first Bowden cable (230).

13. Vehicle seat (1) with a seat part (5) and a backrest (3), wherein the vehicle seat (1) has a longitudinal adjuster according to one of the preceding claims.

## Revendications

1. Dispositif de réglage longitudinal pour un siège de véhicule (1) présentant une partie d'assise (5) et un dossier (3), présentant un premier rail de siège (2) fixé à la partie d'assise, un deuxième rail de siège (4) par rapport auquel le premier rail de siège (2) peut coulisser dans la direction longitudinale (x), le dispositif de réglage longitudinal présentant un verrouillage pour empêcher un coulissement longitudinal du siège de véhicule (1), le siège de véhicule (1) pouvant être transféré, pour faciliter l'accès aux sièges arrière, de la position d'utilisation dans une position d'accès aisé, lorsque le verrouillage du dispositif de réglage longitudinal du siège de véhicule (1) est déverrouillé par un rabattement du dossier (3) vers l'avant, un dispositif à mémoire étant prévu, lequel mémorise une position longitudinale ajustée du siège, qui est quittée et qui est reprise à nouveau sous l'effet d'un coulissement longitudinal effectuée du siège de véhicule (1), le dispositif de réglage longitudinal activant le dispositif à mémoire lorsque le verrouillage du dispositif de réglage longitudinal est effectué par un rabattement du dossier (3) vers l'avant et le dispositif de réglage longitudinal désactivant le dispositif à mémoire lorsque le verrouillage du dispositif de réglage longitudinal est effectué par un actionnement manuel au moyen d'une manette (200), **caractérisé en ce**
**qu'**un levier d'actionnement (202) est disposé au niveau d'un tube de transfert (204), un levier d'entraînement (246) étant prévu, lequel est supporté de manière rotative sur le levier d'actionnement (202).

2. Dispositif de réglage longitudinal selon la revendication 1, dans lequel le levier d'actionnement (202) est prévu pour agir sur un dispositif de verrouillage de la paire de rails respective du dispositif de réglage longitudinal afin de déverrouiller celui-ci.

3. Dispositif de réglage longitudinal selon l'une quelconque des revendications 1 et 2, dans lequel le levier d'entraînement (246) présente une goupille (252) saillant latéralement pour l'actionnement d'un levier de réinitialisation (242), pour la désactivation et/ou la réinitialisation du dispositif à mémoire.

4. Dispositif de réglage longitudinal selon l'une quelconque des revendications 1 à 3, dans lequel le levier d'actionnement (202) présente un levier de blocage (258) qui est disposé du côté du levier d'actionnement (202) opposé au levier d'entraînement (246).

5. Dispositif de réglage longitudinal selon la revendication 4, dans lequel le levier de blocage (258) est supporté de manière rotative.

6. Dispositif de réglage longitudinal selon l'une quelconque des revendications 4 et 5, dans lequel le levier de blocage (258) et le levier d'entraînement (246) sont disposés à des positions différentes le long d'une étendue longitudinale du levier d'actionnement (202).

7. Dispositif de réglage longitudinal selon l'une quelconque des revendications 4 à 6, dans lequel le dossier (3) agit au moyen d'un premier câble Bowden (230) connecté à celui-ci sur le levier d'actionnement (202).

8. Dispositif de réglage longitudinal selon la revendication 7, dans lequel le premier câble Bowden (230) est relié au levier de blocage (258).

9. Dispositif de réglage longitudinal selon l'une quelconque des revendications 4 à 8, dans lequel le levier d'actionnement (202) présente une butée (248) coopérant avec le levier de blocage (258).

10. Dispositif de réglage longitudinal selon la revendication 9, dans lequel le levier d'actionnement (202) peut être amené en contact avec la butée (248) par un rabattement du dossier (3) vers l'avant.

11. Dispositif de réglage longitudinal selon l'une quelconque des revendications 9 à 10, dans lequel le levier d'actionnement (202) est actionné par un rabattement du dossier (3) vers l'avant lorsque le levier de blocage (258) est en contact avec la butée (248).

12. Dispositif de réglage longitudinal selon l'une quelconque des revendications 7 à 11, dans lequel le levier de blocage (258) est sollicité avec une force de ressort au moyen d'un premier élément de ressort (254) par rapport au levier d'actionnement (202) à l'encontre de la force de traction du premier câble Bowden (230).

13. Siège de véhicule (1) comprenant une partie d'assise (5) et un dossier (3), le siège de véhicule (1) présentant un dispositif de réglage longitudinal selon l'une quelconque des revendications précédentes.
